Europäisches Patentamt

European Patent Office

Office européen des brevets

(11) Publication number: **0 134 381**
**A1**

## (12) EUROPEAN PATENT APPLICATION

(21) Application number: **83830169.5**

(22) Date of filing: **24.08.83**

(51) Int. Cl.⁴: **B 29 D 12/02**

(43) Date of publication of application:
**20.03.85 Bulletin 85/12**

(84) Designated Contracting States:
**AT CH DE FR GB LI SE**

(71) Applicant: **Marchese, Gianna
Via S. Giovanni, 32
I-32042 Calalzo di Cadore (Belluno)(IT)**

(72) Inventor: **Marchese, Gianna
Via S. Giovanni, 32
I-32042 Calalzo di Cadore (Belluno)(IT)**

(74) Representative: **Cicogna, Franco
Ufficio Internazionale Brevetti Dott.Prof. Franco Cicogna
Via Visconti di Modrone, 14/A
I-20122 Milano(IT)**

(54) **Method for making spectacles frames.**

(57) The method provides for the use of open molds (1, 3) made of resilient elastomeric materials, as suitably processed, therein there are formed the impressions (2, 4) of the spectacles front portion and arms.

Into the mentioned impressions (2, 4) there are cast epoxy resins, as suitably additivated with a hardener agent.

*Fig. 1*

Fig. 1

EP 0 134 381 A1

The present invention relates to a method for making spectacles frames.

As it is known such a frame comprises a front portion, generally consisting of two loop members joined by a bridge member, thereto two arms or rods are articulated.

The mentioned parts are presently made starting from different materials, each thereof is to be processed by determined operating methods.

These methods are in general carried out by using very expensive and cumbersome apparatus, under the supervision of skilled personnel, which apparatus are to be subjected to an extensive maintenance, thereby causing the cost of the produced frame to greatly increase.

Accordingly, the task of the present invention is to overcome the thereinabove mentioned drawbacks, by providing such a method for making spectacles frames which may be carried out by simple apparatus and/or tools.

Within that task, it is a main object of the present invention to provide such a spectacles frame making method which may be carried out in a very simple way, without requiring supervision by skilled personnel.

Another object of the present invention is to provide such a spectacles frame making method which may be carried out by apparatus free of maintenance problems.

According to one aspect of the present invention the above task and objects, as well yet other objects which will become more apparent thereinafter, are achieved by a method for making spectacles frame, characterized in that it provides for the use of open molds, made of a silicone rubber material, therein there are formed the patterns of the spectacles front portion and arms to be obtained, said patterns or impressions being provided for receiving a mixture of at least two epoxy resins, including a hardener agent.

Further characteristics and advantages of the method for making spectacles frames according to the present invention will become more apparent thereinafter from the following detailed description of a preferred embodiment thereof, with reference to the accompanying drawing, where:

fig.1 illustrates, by way of an example, a mold for forming a spectacles front portion according to the invention; and

fig.2 illustrates, also by way of an example, a mold for forming two spectacles arm or rod members.

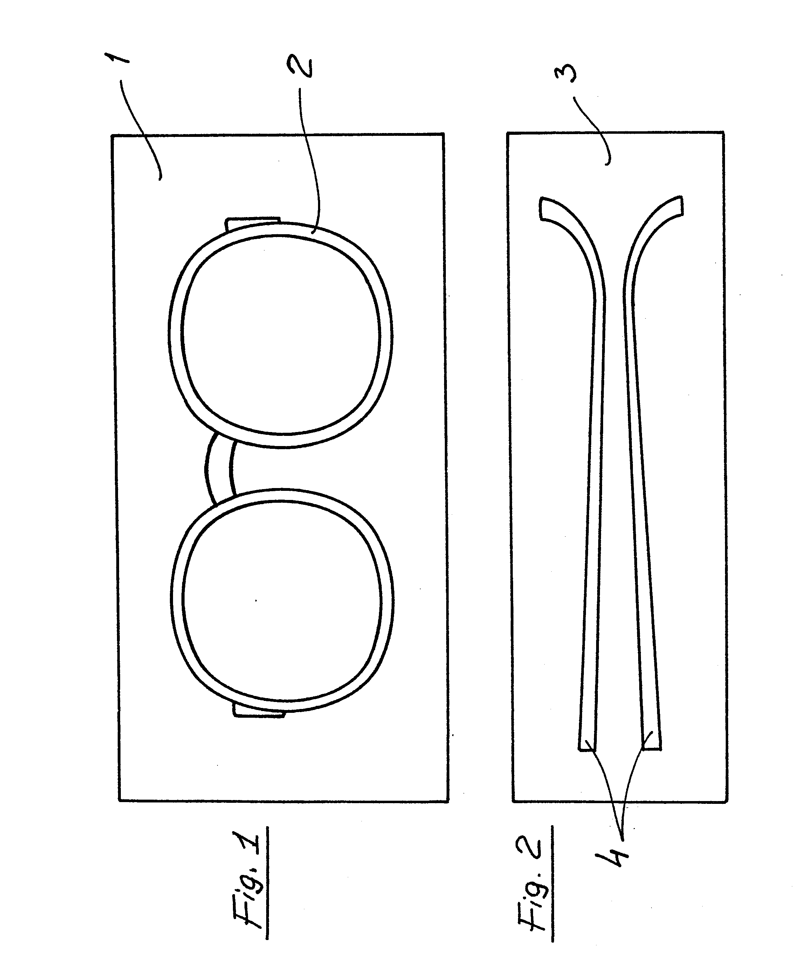

With reference to the numbers of the figures of the accompanying drawing, the method for making spectacles frames according to the present invention provides for the use of at least a first mold 1, therein the pattern or impression of a spectacles front portion 2 is formed, and at least a second mold 3, therein the pattern or impression of an arm pair 4 is formed, the configuration or shape of the arms depending on the configuration of said front portion.

The mentioned molds, in particular, are made starting from very soft and resilient materials, such as closed-cell foamed materials or, preferably, a silicone rubber material.

Into the mentioned impressions there are poured or cast epoxy resins, as obtained from Epichloridrine or Bisphenol A, or epoxy-cresol Novolac resins, or epoxy-phenol Novolac resins as additivated by suitable hardener agents such as polyamines, polyaminic amides, polyphenols, polycarboxylic acids, and so on.

A preferred formulation of the above mentioned resins, to be cast into the open molds, provides, according to the invention, that, for producing the spectacles front portion, the following components be mixed (by weight):
- 50 parts of CY 221- Araldite (CIBA)
- 50 parts of DRL-Araldite (CIBA)
- 30 parts of Euredur 40 (Shering)

For making the spectacles arms, on the other hand, the following components are used (also by weight):
- 50 parts of CY 221-Araldite (CIBA)
- 50 parts of DER 331 (U.C.E)
- 30 parts of Euredur 40 (Shering)

It will be apparent to those skilled in the art that the produced spectacles front portions and arms will be hinge coupled by means of known

0134381

members and methods, to provide finished spectacles frames.

From the above disclosure and the figures of the accompanying drawings it will be apparent that the invention fully achieves the intended objects.

While a preferred embodiment of the method for making spectacles frames has been thereinabove disclosed and illustrated, it should be noted that this embodiment is susceptible to several modifications and variations all thereof come within the spirit and scope of the invention, as defined in the accompanying claims.

C L A I M S

1- A method for making spectacles frames, characterized in that it provides for the use of open molds
(1,3), made of a silicone rubber material, therein
there are formed the patterns or impressions (2,4)
of the spectacles front portion (2) and arms (4)
to be obtained, said patterns or impressions being
provided for receiving therein a mixture of at
least two epoxy resins, including a hardener agent.

2- A method according to the preceding claim,
characterized in that it provides for the use of
at least a firts mold (1) bearing the impression
of a spectacles front portion (2), and at least a
second mold (3), bearing the impression of a
spectacles arm pair (4).

3- A method according to the preceding claims,
characterized in that the mentioned molds (1,3)
are made of very soft materials, such as closed
cell foamed materials.

4- A method according to claim 1, characterized in
that said epoxy resins are derived from Epichloridrine
and Bisphenol A, or epoxy-cresol Novolac resins, or
epoxy-phenol Novolac resins.

5- A method according to claim 1, characterized in
that said hardener agent consists of polyamines,
polyamino-amides, polyphenols, polycarboxilic acids,
and the like.

6- A method, according to one or more of the preceding
claims, characterized in that, for producing said spectacles front portions, the following mixture is cast(by weight) into said molds:

-50 parts of CY 221-Araldite (CIBA)

-50 parts of DRL- Araldite (CIBA)

-30 parts of Euredur 40 (Shering)

7- A method, according to one or more of the preceding claims, characterized in that, for producing said spectacles arms, the following mixture is cast (by weight) into said molds:

-50 parts of CY 221-Araldite (CIBA)

-50 parts of DER 331 (U.C.E.)

-30 parts of Euredur 40 (Shering)

8- A method for making spectacles frames, according to the preceding claims, and substantially as disclosed and illustrated for the intended objects.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 169 121 (OPTIPATENT AG) <br> * Whole document * | 1-8 | B 29 D 12/02 |
| X | AT-B- 324 687 (AMERICAN OPTICAL CORP.) <br> * Claim; page 3, lines 47-59 * | 1-2,4-8 | |
| X | AT-B- 326 344 (AMERICAN OPTICAL CORP.) <br> * Claim 1; page 2, lines 29-46; page 3, lines 19-28 * | 1-8 | |
| X | DE-A-2 033 187 (F. VOIT) <br> * Claims 1-3 * | 1,4-8 | |
| X | DE-C-1 270 267 (ARTPLAST KUNSTSTOFFERZEUGNISSE GMBH & CO. KG) <br> * Whole document * | 1-8 | **TECHNICAL FIELDS SEARCHED (Int. Cl. 3)** <br><br> B 29 D 12/00 |
| A | FR-A-2 027 601 (OPTIPATENT AG) <br> * Claims 1-3 * | 1,4-8 | |
| A | DE-A-2 611 019 (AMERICAN OPTICAL CORP.) | | |

The present search report has been drawn up for all claims

| Place of search <br> BERLIN | Date of completion of the search <br> 29-03-1984 | Examiner <br> FINDELI B.F.C |
|---|---|---|